# EUROPEAN PATENT SPECIFICATION

(11) **EP 0 948 252 B1**
(45) Date of publication and mention of the grant of the patent: **25.06.2003**
(21) Application number: 98950650.6
(22) Date of filing: 25.09.1998
(51) Int. Cl.: A01D 46/24

(54) **MECHANICALLY PICKING FRUIT FROM TREES**
MECHANISCHER FRÜCHTEPFLÜCKER
CUEILLETTE MECANIQUE DES FRUITS SUR LES ARBRES

(30) Priority: 30.09.1997 US 941608
(43) Date of publication of application: 13.10.1999
(73) Proprietor: Crunkelton, William, S., Avon Park, FL 33825 (US)
(72) Inventor: Crunkelton, William, S., Avon Park, FL 33825 (US)
(74) Representative: Price, Paul Anthony King
(86) International application number: PCT/US98/19882
(87) International publication number: WO 99/016296

(56) References cited:
- US-A- 3 623 306
- US-A- 3 713 282
- US-A- 4 377 064
- US-A- 5 161 358
- US-A- 5 428 947
- US-A- 5 666 795

## Description

### TECHNICAL FIELD

This invention relates to the mechanical harvesting or "picking" of tree-grown fruit, such as citrus, especially without damaging either the fruit or the tree bearing it.

### BACKGROUND ART

Mechanically aided harvesting of tree fruit is gaining in desirability because expenses of employing fruit-picking workers are rising, not only in direct costs, but also by reason of customary operational inefficiencies, such as failing to pick all the ripe fruit, which becomes overripe and useless, or picking unripe fruit, which then can never become ripe, as well as perhaps damaging twigs or branches of such fruit-bearing trees in doing so.

An earlier type of mechanical fruit-picking equipment shook at least part of a fruit-bearing tree to dislodge the ripest fruit, now recognized as insufficiently effective, and likely to harm both fruit and tree. Examples appear in U.S. patents to Clark, 3,462,930 (1969); Carson, 3,561,204 (1971); and Korthuis, 4,974,404 (1990) & 5,027,593 (1991).

Other attempts, still continuing, have focused more on emulating human picking movements, to optimize the results. Yet the task has proved more difficult than ever expected. Examples in U.S. patents include Baker, 3,561,205 (1971); Reynolds, 3,623,306 (1971); Chen, 3,827,221 (1974); Robbins 4,163,356 (1977); Reynolds 4,192,125 (1990); Edwards, 4,202,158 (1980) & 4,208,860 (1980); Peterson, 4,377,064 (1983); Visser, 5,421,146 (1995) & 5,428,947 (1995); and Wilkinson, 5,666,795 (1997).

Comparable prior efforts of the present inventor resulted in U.S. Patent 5,161,358 (1992).

The main deficiency of the preceding attempts has been an inability to maximize picking of the ripe fruit, while minimizing related damage to both ripened and unripe fruit. Such seemingly incompatible goals proved to be unexpectedly more difficult to attain than the inventors likely thought.

### DISCLOSURE OF THE INVENTION

According to a first aspect, the present invention provides the harvesting machine of claim 1. According to a second aspect, the present invention provides the mechanical harvesting method of claim 10.

The pre-characterising portions of claims 1 and 10 each read on US-A-5,161,358.

The present invention makes it possible to pick the fruit ripe enough to be severable from its supporting stem, but not to damage either the fruit tree or the machinery as its array of arms, each with picking fingers, is deployed into the tree foliage, or whenever a picking finger encounters an unripe stem or non-severable foliage during array withdrawal to its undeployed position.

A vehicle movable between rows of fruit trees may carry both a fixed upstanding backstop and adjacent upright frame carrying the array of horizontally protruding arms.

Other attributes and features of this invention will become apparent from the following description by reference to the accompanying drawings of preferred embodiments thereof presented by way of example rather than limitation.

### BRIEF DESCRIPTION OF THE DRAWINGS

Fig. 1 is a top plan view of a harvesting machine of the present invention, situated within a fruit tree grove;
Fig. 2 is a similar plan view, with a movable frame deployed to project picking arms into the tree foliage;
Fig. 3 is a rear elevational view of the same machine, with the movable frame at rest in non-deployed position;
Fig. 4 is a similar rear elevation, but with movable frame and supported arms deployed via pantograph linkage;
Fig. 5 is a side elevation of the same machine with movable frame and supported arms in non-deployed position;
Fig. 6 is a similar side elevation of that machine, with the movable frame and arms in non-deployed position;
Fig. 7 is a top plan view of a supporting arm carrying its picking fingers in normal rest position;
Fig. 8 is a top plan view of a supporting arm end cap;
Fig. 9a is a picking finger front elevational view;
Fig. 9b is a top plan view of the same picking finger;
Fig. 9c is a rear elevational view of the same finger;
Fig. 9d is a bottom plan view of the same finger;
Fig. 10 is a front elevational view of a supporting arm with picking finger in rest position pivotable thereon;
Fig. 11a is a fragmentary sectional plan view of the assembly of a supporting arm and a picking finger thereon in normal rest position, at section line 11a on Fig. 10;
Fig. 11b is a view similar to Fig. 11a, except with the picking finger depressed into arm insertion position;
Fig. 11c is a view similar to the two preceding views except that the picking finger is oriented at a right angle to its supporting arm, as in retrograde pivoting of it by an unyielding branch in withdrawal of the arm from foliage;
Fig. lid is a view of the extreme retrograde pivoted position of the picking finger relative to supporting arm;
Fig. 12 is a vertically exploded perspective view of a supporting arm and its mounting assembly;
Fig. 13a is a perspective view of a supporting arm and its mounting assembly in normally seated relationship;
Fig. 13b is a perspective view of a supporting arm and its mounting assembly in abnormally unseated relationship;
Fig. 14 is a front elevational view of a partial array of four supporting arms and respective picking fingers;
Fig. 15 is a side elevational view of a supporting arm mounting assembly, with respective arms diversely oriented;
Fig. 16 is a rear elevational view of an arm reseating assembly for supporting arms unseated by unyielding trees;
Fig. 17 is a side elevational view of an alternative embodiment of pantograph assembly for the supporting arms;
Figs. 18a, 18b, and 18c are side elevational views of yet another embodiment of pantograph assembly in respective fully retracted or rest position, in its partially extended position and in its fully extended position;
Figs. 19a to 19h are top plan views of supporting arm and picking finger at successive stages in deployment and retraction, the finger being depressed by a branch upon forward movement and undergoing over-center forward pivoting of the illustrated finger thereby during retraction;
Figs. 20a to 20g are top plan views of supporting arm and picking finger at successive stages in deployment and retraction, wherein a fruit stem is engaged by the finger and the fruit is successfully picked off thereby;
Fig. 21 is a top plan view of another embodiment of harvesting machine according to this invention; and
Fig. 22 is a side elevational view of the harvesting machine of views before Fig. 21 in transport configuration.

### DESCRIPTION OF THE PREFERRED EMBODIMENTS

For convenience of readers of the particularized first part of the following description, a table of reference numerals is appended at the end of this description.

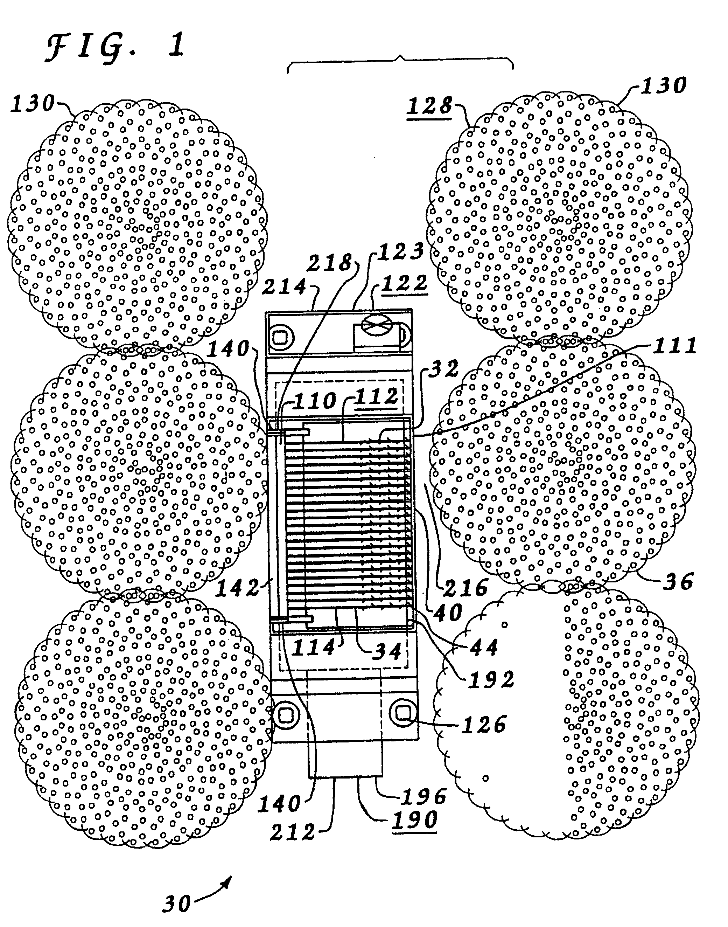

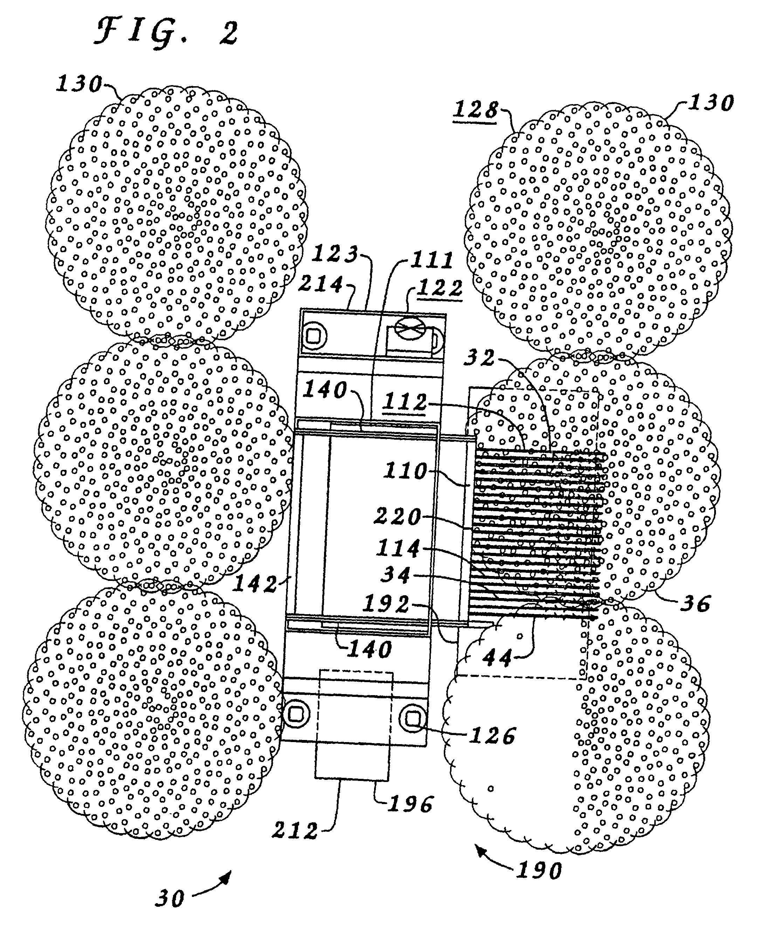

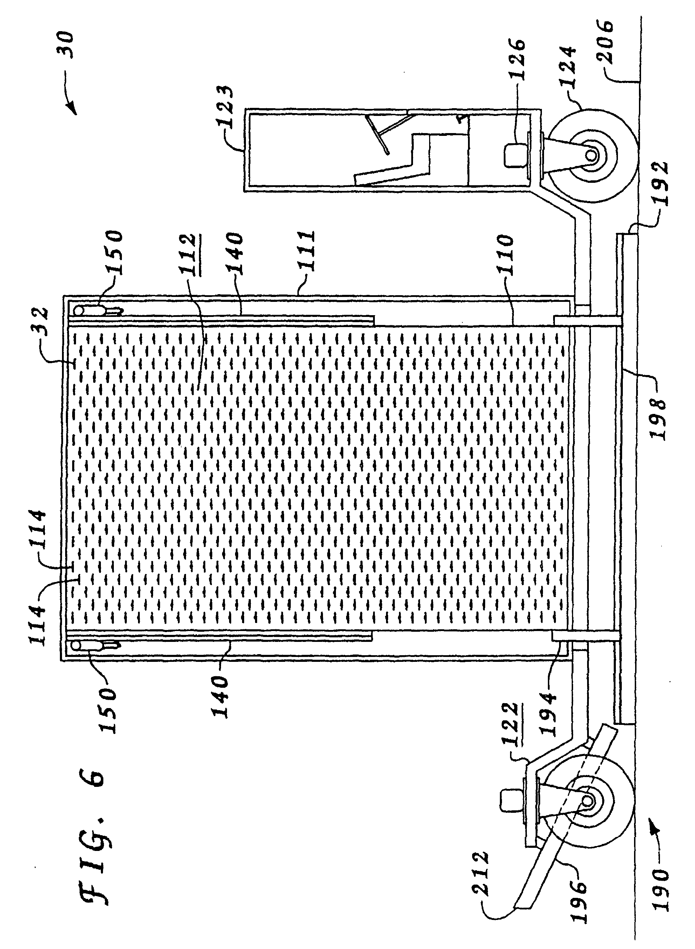

Figs. 1 to 6 show a preferred embodiment of harvesting machine 30 according to the present invention. Figs. 1, 3, and 5 show array 112 of supporting arms 32, non-deployed; Figs. 2, 4, and 6 show the same array fully deployed.

Figs. 1 and 2 show embodiment 30 from above in upright harvesting position 214, in grove 128 of fruit-bearing trees 36, represented as two rows 130 of three trees each. The individual fruits are represented by small circles within the scalloped outer edges of foliage. The left half of the tree outlined at the lower right has only a couple of such circles remaining, its fruit having been picked. Free space 216 is clearance between machine and tree row.

The machine has advanced preparatory to the picking of fruit in the lower left quadrant of the next tree in the same row--by means of self-propelled transport assembly 122 featuring operator cage 123 forward. Transport wheels 124 are rotated by an engine (not shown) via hydraulic drives 126. Visible at the rear is part of fruit catcher assembly 190, including secondary transfer assembly 196 with output end opening 212 therein.

Arm cage 111, supported on housing 110, surrounds the array of supporting arms (each of length 34) as pantograph 140 is non-deployed (position 218), to preclude possible damage to the array during transport. Arms 32 in array 112 are in row levels 114, with the rows laterally offset from level to level, readily visible in subsequent. side views.

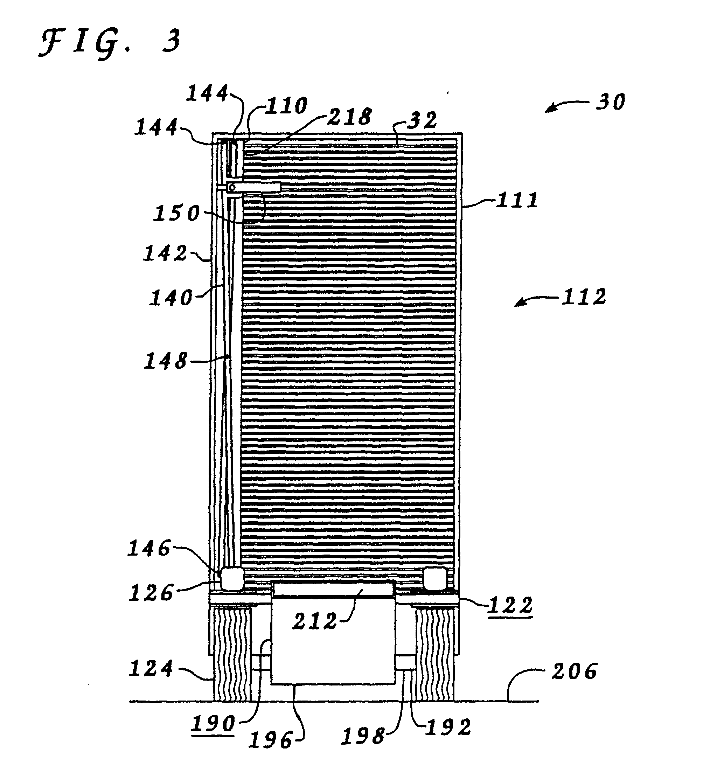

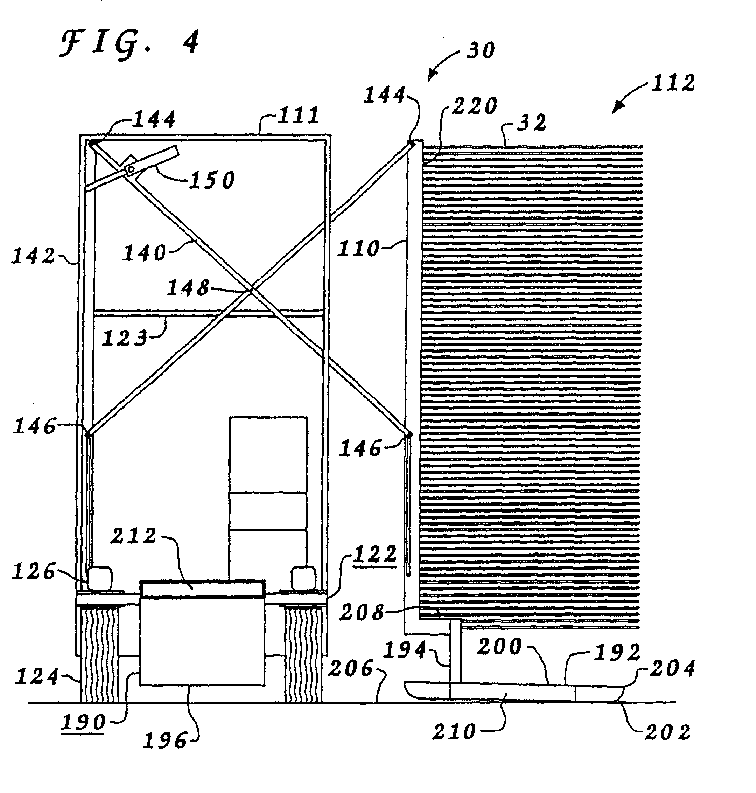

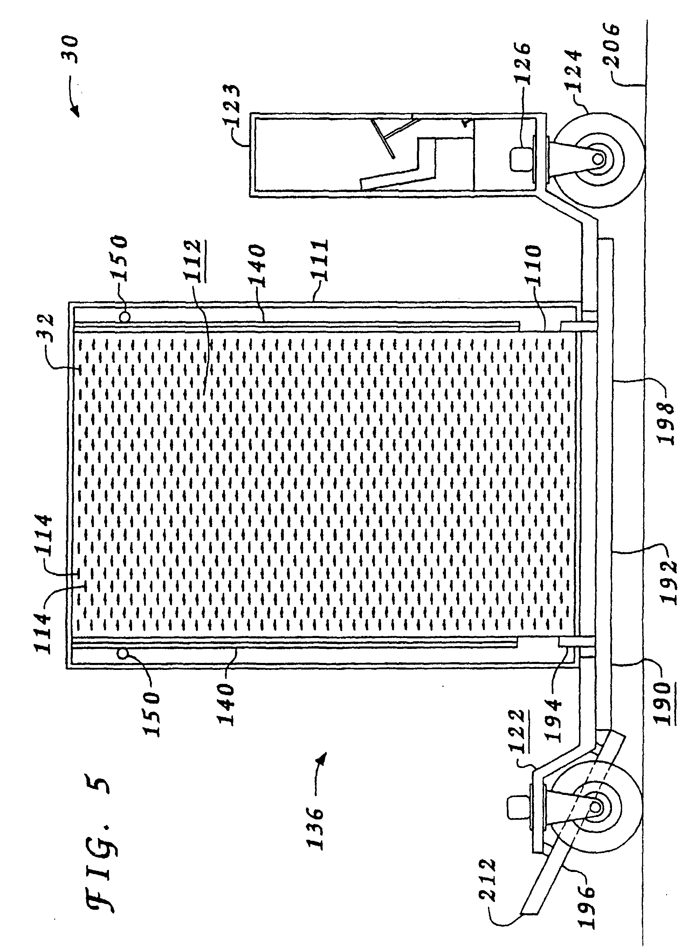

Figs. 3 and 4 show this embodiment, in rear elevation, first in non-deployed (or retracted) position 214 and then in deployed position 220, referenced to arm housing member 110, whereas arm cage 111 remains in place in both views. Prominently visible is pantograph 140, comprising scissors-like links, sharing central pivot connection 148, secured between upright support housing 142 and upright arm housing 110 at fixed upper pivot points 144 and vertically slidable lower pivot points 146. Deployment and retraction to non-deployed rest position are provided by pair of hydraulic drives 150 (one visible here). Fig. 5 shows details of fruit collection assembly 190: pan 192, on frame 116 bottom end extensions 208, with access panel 210, contoured ends 202, at maximum forward extent 204, being enabled by lift assembly 194, as in its lowered position 200 on ground 206.

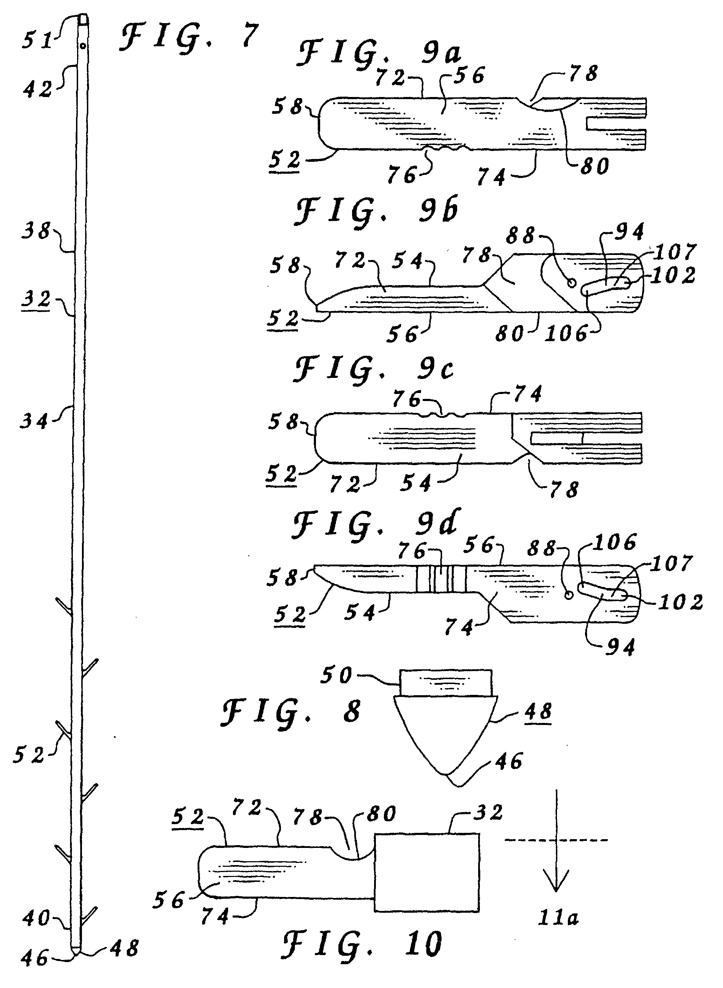

Fig. 7 shows single supporting arm 32 in tubular form 38 extending for length 34 having roller 51 on its back or coupling end 42, and fitted at its front end 40 with end cap 48 tapering to nose 46. The arm carries a half dozen representative laterally protruding picking fingers 52 (spaced alternately on opposite sides) extending obliquely backward. Fig. 8 shows the end cap in more detail, more especially as being relieved along its rear edge so as to fit within the otherwise open front end of the arm.

Figs. 9a to 9d show a preferred embodiment of picking finger 52, viewed in respective successive front elevation, top plan, rear elevation, and bottom plan. Accordingly, it has upper surface 72, lower surface 74, near or inner surface 54, and far or outer surface 56 (the latter two as related to its normally oblique orientation to its supporting arm). Left end 58 of this finger is its normally protruding outer end, at the (viewer's) left, as on the arm of the preceding view, the other end of the finger being pivotally mounted within the arm, as shown in subsequent views. The upper surface of the finger has chevron-shaped hollow 78 with front cutting edge 80 to hold and sever a fruit stem where juxtaposed to the arm. The back of the finger has several indentations 76 midway between the exposed end of the finger and its supporting arm to engage the top of a fruit whose stem is being gripped by the engaging finger.

Fig. 10 shows finger 52 as supported by arm 32, viewed head-on, preparatory to illustration of the next sequence of views, showing the mounting of such a picking finger in its supporting arm, taken along the section line 11a here.

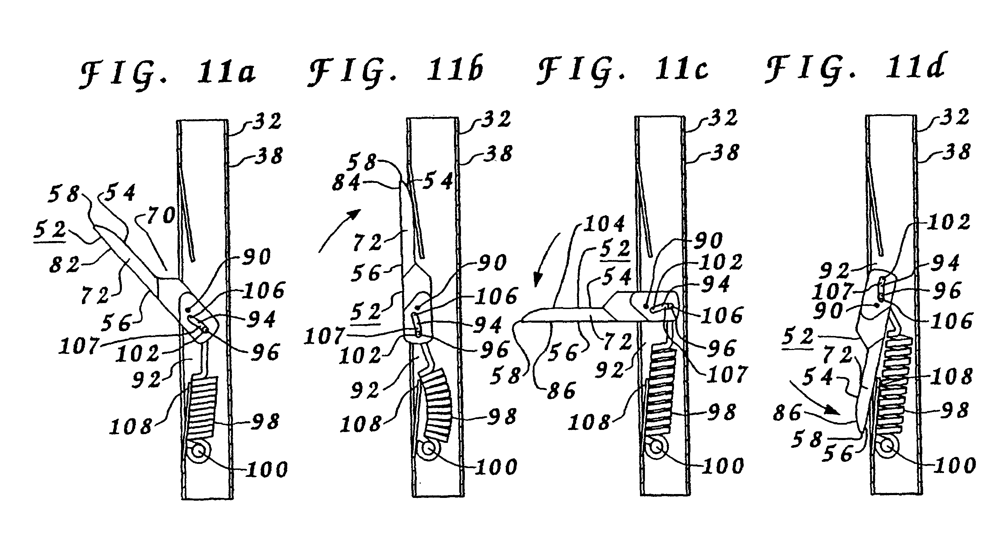

Figs. 11a to 11d show supporting arm 32 fragmentarily in sectional top plan along with picking finger 52 mounted pivotally on pivot shaft 90 in the arm. In Fig. 11a, the finger protrudes through opening 92 in the left side of the arm and extends obliquely backward in normal rest position 82, as set by tension of spring 98, whose transfer end 96 normally is in near end 107 of transfer slot 94 in the base of the finger, its other end being secured to anchor 100.

In Fig. 11b, the picking finger is depressed against a portion of the sidewall of the supporting arm recessed to accommodate it substantially flush with the adjacent side of the arm, in the orientation assumed by the finger when encountering a branch during deployment and thereby enabled to bypass the branch, whereupon the finger will return to its normal deployed orientation as in Fig. 11a, and upon withdrawal of the array will function normally. Of course, the desired function is to sever a fruit stem, but if the finger encounters a branch instead, which it cannot sever, it can pivot over-center, through perpendicular orientation 104 to the arm, in Fig. 11c, on through an arcuate range 86 to an extreme forward position at other end 107 of slot-like opening 92, as in Fig. 11d, to bypass any branch that can be bypassed, much as it would be by depression pivoting of the finger upon arm deployment as in Fig. 11b. Transfer slot has curvature 107 concave to the spring end travel, thus contributing to an over-center pivoting of the finger.

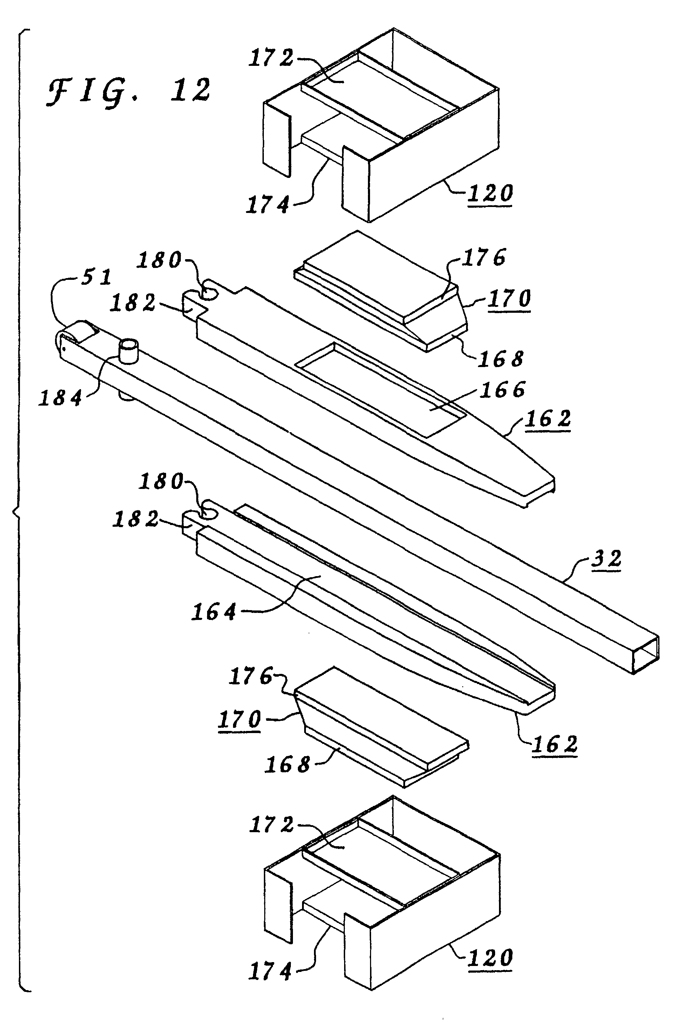

Fig. 12 shows a supporting arm 32 and its mounting, an assembly of a half dozen component pieces, symmetrically arranged, three above and three below, relative to the arm. Mount boxes 120 are outermost, resilient blocks 170 are intermediate, and guides 162 are innermost, abutting the arm (whose further forward portion is omitted from this view). At its back end, the arm itself has roller 51, then nearby coupling member 184 extending above and below the arm, and next the mounted portion of the arm. The picking fingers (not shown) are supported further forward. Each guide 162 has groove 164 in one face, to receive the arm slidably, and has a rear end 182 defining C-shaped slot 180 interconnectable with arm coupling member 184 in normal deployment configuration. The opposite (ungrooved) face of each guide has rectangular recess 166 therein, well spaced from each end, adapted to receive the base of the adjacent resilient block from front end 168 to rear end 176. Mounting boxes 120 have symmetrically arranged upper and lower pans 172 and 174 into which outer surfaces of respective blocks fit.

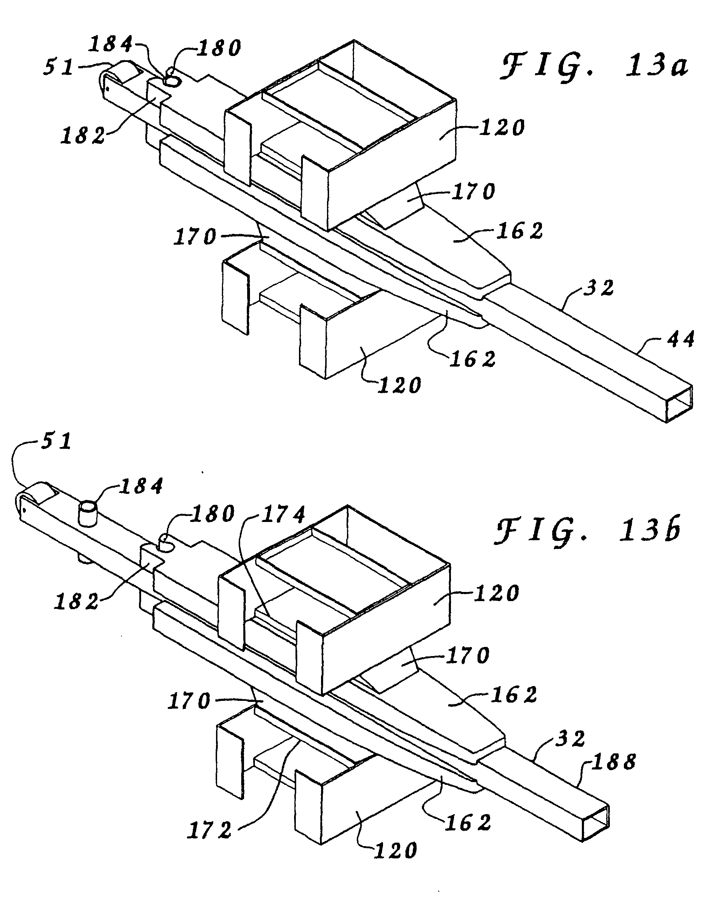

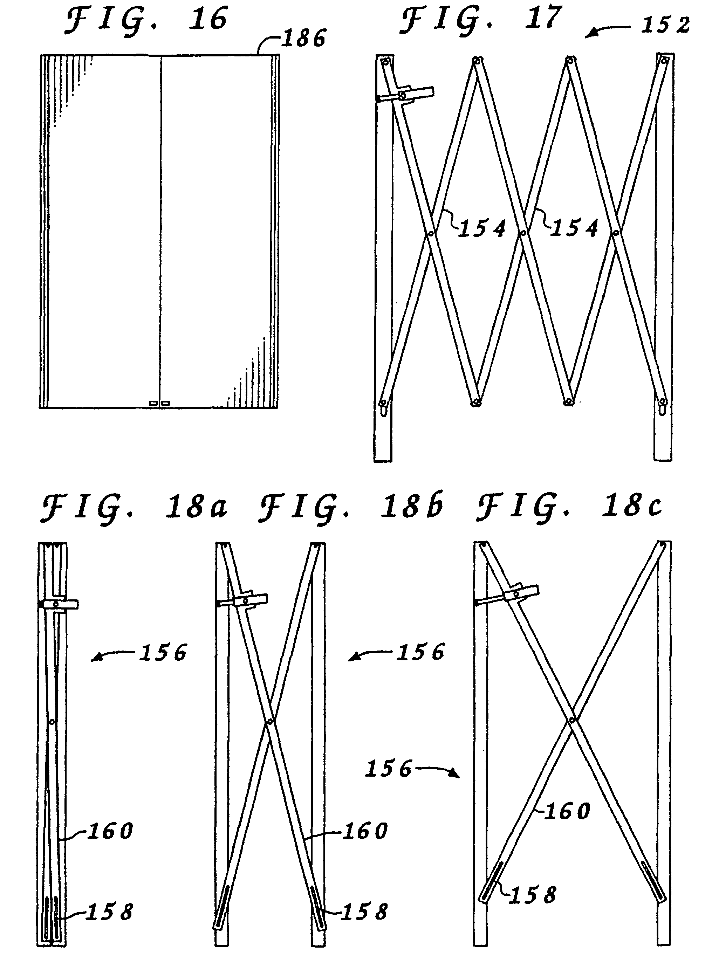

Figs. 13a and 13b show supporting arm 32 within the assembled mounting components shown in preceding Fig. 12. Fig. 13a shows the arm in normal operating position, with coupling member 184 seated in the slot formed in back end 180 when in its normal configuration. As noted above, the picking fingers, being further forward, are not visible here. Fig. 13b shows the same arm slidably uncoupled or unseated, with coupling member 184 absent from (and visible ahead of) complementarily shaped back end 180 of the arm, as after an encounter of its forward end with a tree trunk or similarly unyielding branch. It is preferable for the arm to become unseated and slide back rather than to remain coupled and become damaged or cause damage to its mounting. Whenever the array is withdrawn to its original undeployed position, contact of arm rollers 51 with backstop 186 (Fig. 16) returns uncoupled arms to normal seated configuration.

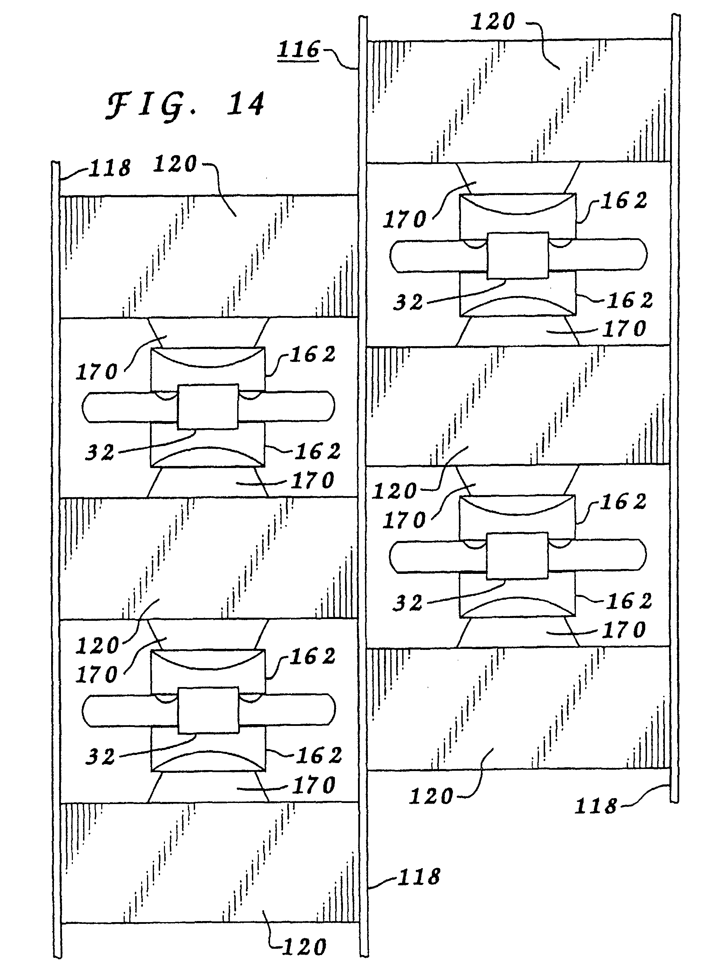

Fig. 14 shows, fragmentarily in front elevation, array frame 116, for four representative supporting arms 32, each with a pair of picking fingers (unnumbered here) protruding to the right and left. The arms are diagonally offset in height and supported in their respective mounts as shown in preceding views, carried by spaced vertical frame plates 118, which are viewed edge-on here.

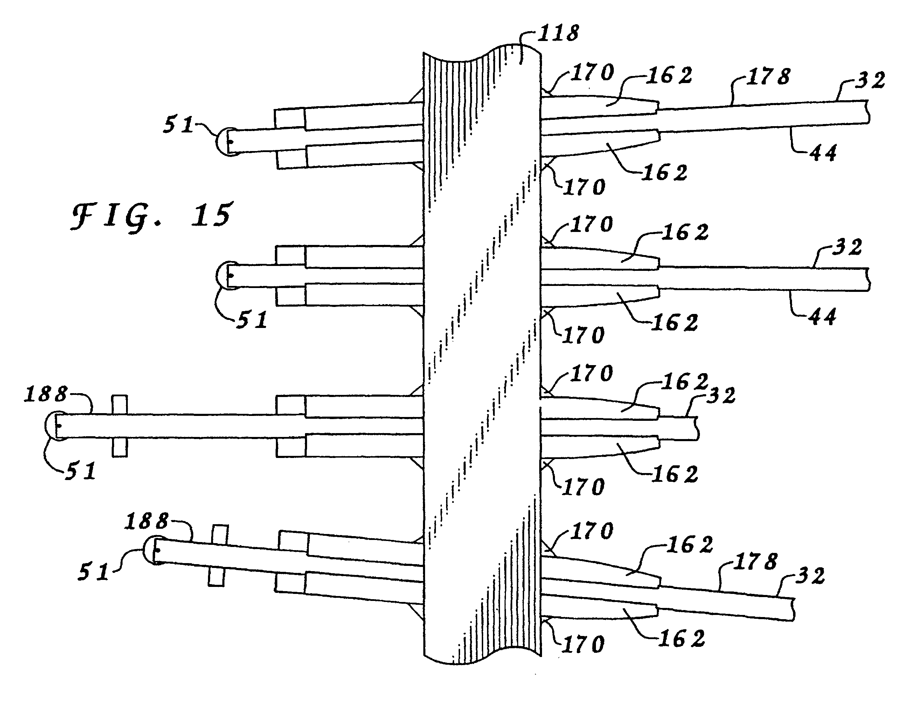

Fig. 15 shows, in fragmentary side elevation, a plate 118 carrying four supporting arms 32, variously oriented on their flexible mounts. Only parts of resilient blocks 170 and guides 162 are visible. (Deflection of the arms out of the plane of this view is not discernible--but may exist.) The topmost arm is visibly slanting up. The arm next below it is level (but may be deflected somewhat to either side). Both of these first two arms are fully engaged with their mountings. However, the remaining arms are both unseated. Whereas the lowermost arm is shown deflected downward, to about the same extent as the top one is deflected upward, this bottom arm also has become uncoupled, and now has slid somewhat to the rear of its fully seated position, and the uncoupled arm just above it has slid even further backward.

Fig. 16 shows backstop 186, a vertical panel, divided in half (doorlike) to facilitate access, and adapted--when abutted by roller 51 on the back end of an uncoupled arm 32, as the array has been withdrawn to its original undeployed position--to force such unseated arm forward and so recouple it to guides 162 of its mounting. In practice, the backstop function may be incorporated into the rearmost member of housing 142 remaining stationary during deployment and withdrawal. Alternatively, a separate backstop may be fastened to such frame member, as may be preferable.

Fig. 17 shows, in side elevation, first alternative or second embodiment 152 of arm-deployment pantograph, partly extended, with more links and intersecting pivots 154, than already shown, as in Figs. 3 and 4.

Fig. 18 shows third (second alternative) two-link arm-deployment pantograph 156 having slotted tracks 158 in the lower ends of links 160 to allow them to fold completely down and against the vertical members.

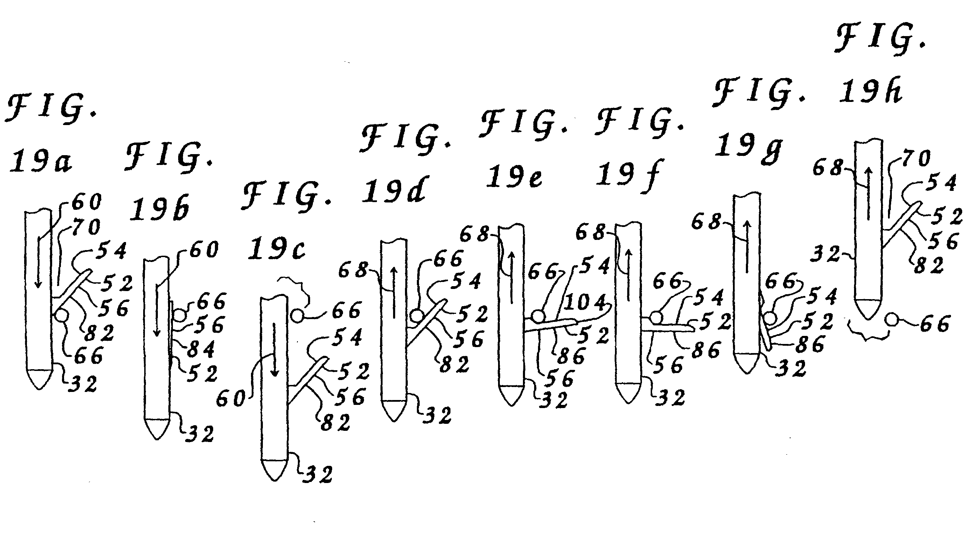

Figs. 19a to 19h illustrate, from overhead, deployment and retraction or withdrawal of the foremost portion of a representative arm 32, featuring the action of the picking finger as the arm advances and withdraws having encountered a branch 66 instead of a fruit stem. In Figs. 19a to 19c, the arm is moving forward (arrow 60) during its deployment. Picking finger 52 protruding from the arm encounters branch 66 in Fig. 19a, and becomes depressed by the branch substantially flush with the arm in Fig. 19b, and finally has passed by the branch in Fig. 19c. At full deployment, the arm reverses direction (reverse arrow 68), then picking finger 52 engages branch 66 (at acute junction 70) in Fig. 19d. The branch not being severable by the finger, further withdrawal of the arm forces the finger outward and nearly perpendicular (104) to the arm in Fig. 19e, then over-center past the perpendicular in Fig. 19f, and completely forward and against the forward part of the arm in Fig. 19g. Then the branch slips past (aided by some lateral arm deflection) and the finger returns to normal orientation in Fig. 19h.

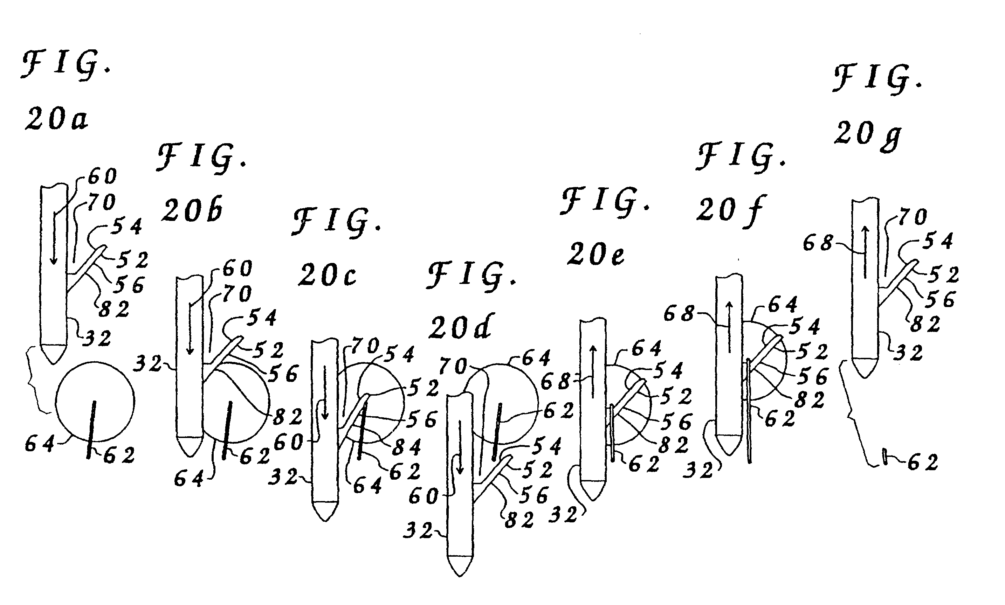

Figs. 20a to 20g illustrate, in like manner to Figs. 19a to 19g, the functioning of the preferred embodiment in actually severing stem 62 of tree-ripened fruit 64, thereby actually picking the fruit from its tree. In Fig. 20a, the forward end of supporting arm 32, with picking finger 52 protruding obliquely at an acute angle with the trailing part of the arm, is approaching fruit 64 supported on stem 62. In Fig. 20b, the fruit is abeam of the arm end and is partly underneath it. In Fig. 20c, stem 62 is engaging the finger and depressing it slightly as the arm moves past it. In Fig. 20d, the stem is just past the finger and the fruit is hanging therefrom, still partly underneath the arm. The arm has reached full deployment, and in the rest of this series of views the arm travel is in the retracting or withdrawing direction (reverse arrows). In Fig. 20e, stem 62 has slid to apex 70 of the angle between the picking finger and the arm. In Fig. 20f, the stem has been pulled, raising the fruit until it is against the finger, severing the stem. Finally, in Fig. 20g, the fruit has disappeared, and only a fragment of stem 62 is in the plane of the view, as the arm continues toward its non-deployed position.

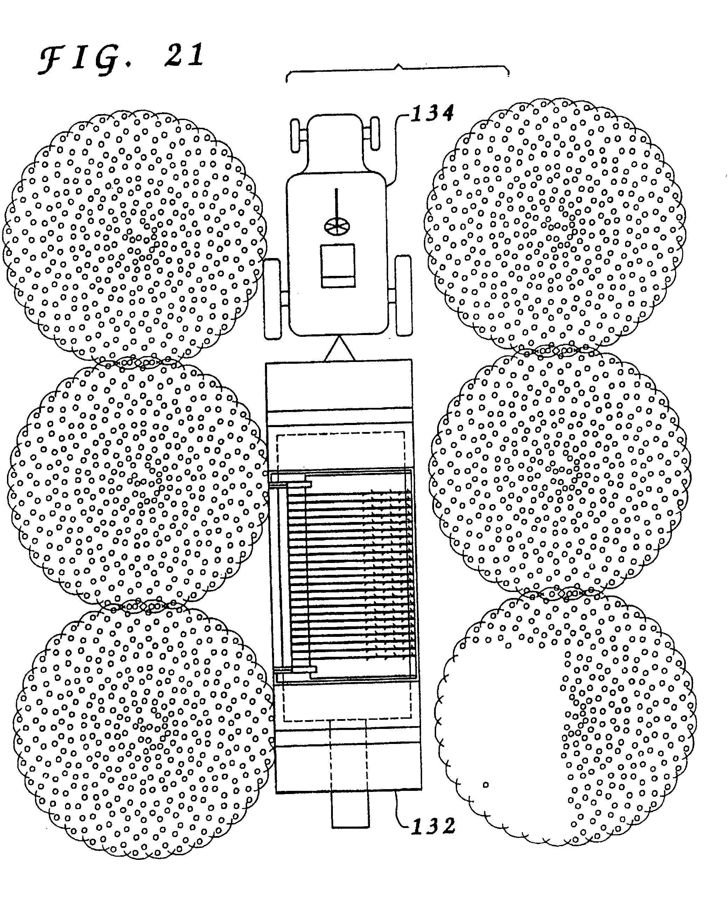

Fig. 21 shows, from overhead, another embodiment of transport vehicle 132 of this invention, differing from the first embodiment by having the harvesting machine drawn by tractor 134 instead of being self-propelled. Otherwise this view is quite similar to Fig. 1, although the portion of the first tree already picked is somewhat smaller.

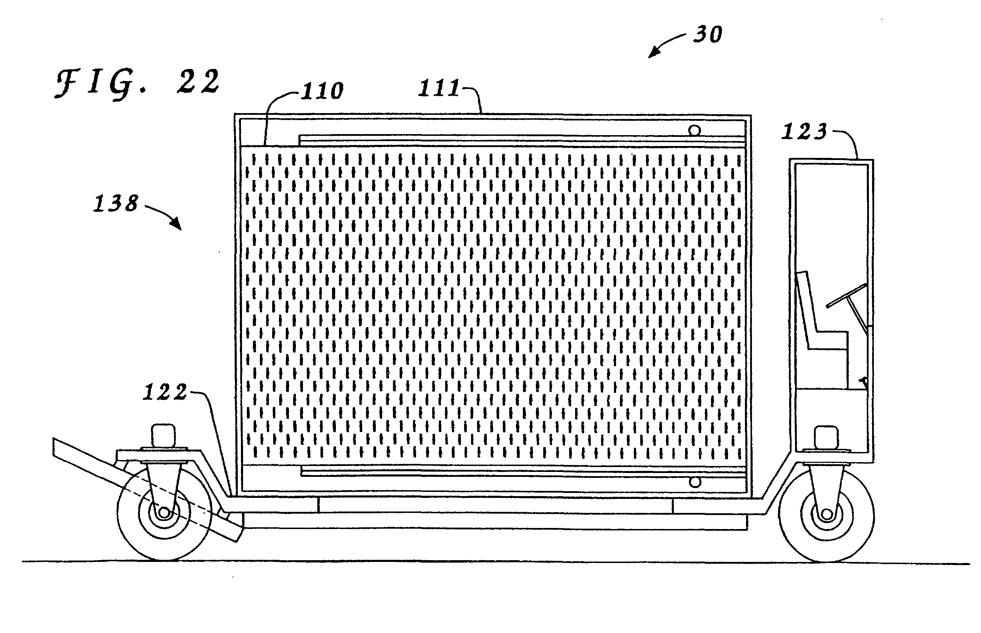

Fig. 22 shows, in side elevation, configuration 138 with arm cage 111 and contents rotated ninety degrees from their previous upright harvesting configuration 136 of Figs. 1 to 6, as may be required for off-grove travel in many legal jurisdictions and which is likely to prove safer for the harvesting machinery as well. The height reduction provides increase overhead clearance and also improves load stability, thus increasing roadworthiness.

The foregoing comments about operational features of the harvesting machine of this invention may have provided an adequate understanding of its modes of operation and the satisfactory results thereof, keyed to structural features upon which such successful operation depends, and detailing the best mode known to the inventor at the present time. Yet it might be possible to achieve satisfactory results by minor alteration in or substitution for some such features. The present description cannot be all-inclusive as to that.

This invention does not require any unusual materials, nor does it involve any unusual techniques of construction. Metal components are fabricated by customary metal-working methods. The resilient mounting of the supporting arms for the picking fingers necessitates hard rubbers or synthetic elastomers to provide the desired degree of deflection, yet will be dependent upon arm composition, length, and weight. The same is true of the arm coupling member and the opening provided for complementary fit in the aft end of guides, as both members need to flex appropriately to seat and unseat. Modest experimentation with size and shape should suffice. Similarly with the exact size and shape of picking fingers and their mounting, including spring tension and the size, shape, and placement of the transfer slot for best results.

The assembly of the arms array and the assembly of the arm mounting are designed for ready disassembly, as may be necessary for repair or replacement of damaged or worn-out components, as should be expected with the extending arms, their resilient mountings, and protruding picking fingers.

The picking fingers are redesigned for improvement in the interaction between fruit, stem, and finger--where fine adjustments may be needed, even when going from one kind or variety of fruit to another, such as in spring tension.

The extension and lowering of the fruit collection pan and its raising and retraction for transport and to aid in transfer of the collected fruit from the secondary transfer assembly are additional features supplementary to picking.

### INDUSTRIAL APPLICABILITY

The harvesting machine of this invention is useful to best advantage in commercial groves having standardized rows of similar-sized trees bearing tree-ripening fruit, preferably having a protective outer skin or rind. Most suitable are citrus fruits, such as grapefruit, lemons, limes, oranges, tangelos, and tangerines, etc. Apples are marginally suitable, but the softer members of that family (e.g., pear, quince) are more susceptible to bruising.

This machine compares very favorably to hand-picking, whereas previous machines overlooked more ripe fruit and picked more unripe fruit, often damaging trees in doing so. Furthermore, prior machinery suffered considerable damage itself, because of its inability to yield to tree branches. Notwithstanding those advantages, some maintenance/repair should be expected. Further improvements doubtless will be made to limit the incidence and severity of damage to the machinery as well as possible damage done by the machinery.

Changes in aspect ratio, overall size, and/or density of arrays of supporting arms (for the picking fingers) are likely to be desirable, as for use in groves of a different fruit, or where the trees themselves are larger or smaller. To meet these requirements, arrays may be modular, in the sense of being made up of individual modules, each having a given number of arm mounts of manageable total size, such as a couple dozen, e.g, six high and four wide. Suitably held together, arrays could be assembled and disassembled at will, in whole or in part, as for maintenance or repair, or to reduce the overall height for over-the-road travel.

Preferred embodiments and variants have been suggested for this invention. Other modifications may be made, as by adding, combining, deleting, or subdividing compositions, parts, steps, or their equivalents, while retaining at least some of the advantages and benefits of the invention, itself defined in the claims following the appended table.

| TABLE OF REFERENCE NUMERALS | | | | | |
|---|---|---|---|---|---|
| 30 | MACHINE | 96 | TRANSFER END | 156 | PANTOGRAPH #3 |
| 32 | SUPPORT ARM | 98 | SPRING | 158 | LINKS OF #3 |
| 34 | ARM LENGTH | 100 | SPRING ANCHOR | 160 | #3 LINK SLOTS |
| 36 | TREE | 102 | SPRING REST | 162 | ARM GUIDE |
| 38 | TUBE FORM | 104 | PERPENDICULAR | 164 | GUIDE GROOVE |
| 40 | FRONT END | 106 | AT OTHER END | 168 | GUIDE RECESS |
| 42 | COUPLE END | 107 | AT NORMAL END | 170 | RESILIENT BLK |
| 44 | ARM DEPLOYED | 108 | CURVATURE | 172 | UPPER PAN |
| 46 | NOSE TAPER | 110 | ARM HOUSING | 174 | LOWER PAN |
| 48 | ARM CAP | 111 | ARM CAGE | 176 | BLKS IN FACE |
| 50 | COUPLING END | 112 | ARM ARRAY | 178 | BLKS OUT FACE |
| 51 | ROLLER | 114 | ROW LEVELS | 180 | C-COUPLE SLOT |
| 52 | PICK'G FINGER | 116 | ARRAY FRAME | 182 | GUIDE AFT END |
| 54 | INNER SURFACE | 118 | FRAME PLATES | 184 | ARM COUPLING |
| 56 | OUTER SURFACE | 120 | MOUNT BOXES | 186 | RESEAT BACK |
| 58 | PROTRUD'G END | 122 | TRANSPORT | 188 | UNCOUPLED ARM |
| 60 | FORWARD ARROW | 123 | OPERATOR CAGE | 190 | FRUIT CATCHER |
| 62 | STEM | 124 | WHEELS | 192 | COLLECT PAN |
| 64 | FRUIT | 126 | HYDRO DRIVES | 194 | LIFT ASSEMBLY |
| 68 | BRANCH | 128 | FRUIT GROVE | 196 | FRUIT XFER |
| 70 | ARM/FING APEX | 130 | TREE ROWS | 198 | UP POSITION |
| 72 | UPPER SURFACE | 132 | ALT TRANSPORT | 200 | DOWN POSITION |
| 74 | LOWER SURFACE | 134 | TRACTOR | 202 | PAN CONTOUR |
| 76 | INDENTATIONS | 136 | GROVE CONFIGN | 204 | PAN FORWARD |
| 78 | HOLLOW | 138 | ROAD CONFIG'N | 206 | GROUND |
| 80 | CUTTING EDGE | 140 | PANTOGRAPH | 208 | FRAME ENDS |
| 82 | FINGER NORMAL | 142 | SUPPORT HOUSG | 210 | ACCESS PANEL |
| 84 | FINGER BACKWD | 144 | UPPER PIVOTS | 212 | OUTPUT END |
| 86 | FINGER EXTENT | 146 | SLIDE PIVOTS | 214 | HARVEST UPEND |
| 88 | ARM OPENING | 148 | CENTER PIVOTS | 216 | SIDE SPACING |
| 90 | PIVOT SHAFT | 150 | DEPLOY DRIVES | 218 | RETRACTED |
| 92 | ARM OPENING | 152 | PANTOGRAPH #2 | 220 | DEPLOYED |
| 94 | TRANSFER SLOT | 154 | PIVOTS OF #2 | | |

## Claims

1. A machine (30) for harvesting tree-ripened fruit and having an array (112) of individually mounted, substantially horizontally aligned arms (32), each arm supporting laterally extending fruit-picking fingers (52), each finger being mounted on a pivot shaft (90) in the arm and projecting out of a side opening (92) in the arm and having a normal rest position (82) in which the finger projects obliquely backward and from which the finger is pivotable backward to a depressed position against the arm and is pivotable forward to an over-center position against the outside surface of the arm for bypassing an unyielding branch or a stem of a fruit too unripe to be severed by the finger when upon withdrawal from tree foliage the finger meets such a branch or stem, wherein there is a slot (94) in the base of the finger (52) and a spring (92) for biasing the base of the finger has one end affixed to an anchor (100) in the arm and is unextended in the normal rest position of the finger;
**characterized in that**:
(i) the slot (94) of each finger (52) is curved and the other end (96) of the spring (98) of the finger engages one end (107) of the curved slot;
(ii) when any finger (52) pivots to its depressed position, the spring (98) thereof is arranged to apply a restoring force towards the normal rest position (82);
(iii) when any finger (52) pivots to its over-center position, the spring (98) thereof is arranged to extend, said other end (96) of the spring is arranged to temporarily transfer to the opposite end (106) of the curved slot (94) and the spring is arranged to apply a restoring force towards the normal rest position (82); and
(iv) the machine further comprises:
resilient arm-mounting members (170) in block form, between which each arm (32) is deflectable up or down, as well as sideways, being thereby enabled to bypass a branch met upon deployment of the array (112) into tree foliage; and
guides (162) between which each arm (32) is normally coupled near its aft end to mating couplings (182) on the guides, and from which the arm is enabled to decouple and to move backward in sliding contact therewith, as upon meeting a tree trunk or other immovable object during its deployment, and to which the arm is enabled to be recoupled, upon being retracted to its formerly undeployed position.

2. The harvesting machine according to claim 1, wherein the guides (162) for a single arm (32) each have on one face an arm-contacting groove (164) to receive the arm slidably therein, and on their opposite face a recess (166) to receive a first face (176) of one of the pair of resilient blocks (170).

3. The harvesting machine according to claim 2, wherein a second face of each of the pair of resilient blocks (170) fits within a pan (172, 174) on an adjacent mounting box (120) supported on a frame (116) of the arm array (112).

4. The harvesting machine according to any preceding claim, wherein alternate levels of the array (112) of the arms (32) and their respective mounting members (170) are offset laterally, whereby the arms and their mounting members are aligned diagonally with those in adjacent levels and are aligned vertically with those in alternate levels.

5. The harvesting machine according to any preceding claim, wherein the slot (94) is curved concavely toward the end of the spring (98) engaged therein, thereby facilitating transfer of that spring end (96) from a rest position (102) in said one end (107) of the slot to the extended position of the spring at said opposite end (106) of the slot.

6. The harvesting machine according to any preceding claim, including deployment mechanism in the form of a pantograph linkage (140, 152, 156) extensibly connecting a support housing (142) and the array (112) of arms (32).

7. The harvesting machine according to any preceding claim, including a fruit-collecting assembly (190) having a catching pan (192) underneath the arm array (112) and a transfer assembly (196) extending from the aft end of the pan to an output end opening (212).

8. The harvesting machine according to claim 7, including a catching pan lift assembly (194) attached to an extension (194) on the arm housing (110).

9. The harvesting machine according to claim 7 or 8, wherein the catching pan (192) is arranged to rest on the ground when in position to collect fruit during retraction of the array.

10. A method of mechanically harvesting tree-ripened fruit using a machine (30) having a picking array (112) of resiliently-mounted substantially-horizontal arms (32), each such arm laterally supporting a plurality of fruit-picking fingers (52), each such finger being mounted on a pivot shaft (90) in the arm and projecting out of a side opening (92) in the arm and having a normal rest position (82) in which the finger projects obliquely backward and from which the finger is pivotable backward to a depressed position against the arm and forward to an over-center position against the outside surface of the arm, wherein there is a slot (94) in the base of the finger (52) and a spring (98) for biasing the base of the finger has one end affixed to an anchor (100) in the arm and is unextended in the normal rest position of the finger, the method comprising the following steps:
deploying the picking array of arms (32) forward into fruit tree foliage with any finger pivoting to its depressed position upon encountering a branch as the array (112) enters the foliage, so as to enable effective deployment;
withdrawing the array (112) backward out from the foliage, whereby at least some of the projecting picking fingers (52) encounter and grip nearby fruit stems, whether carrying ripened or unripe fruit;
severing with the gripping picking fingers (52) the stems of ripened fruit so gripped thereby, and thus releasing the fruit whose stems are severed, to collect therebelow; and
enabling any finger (52), in the event that upon withdrawal such finger meets an unyielding branch or a stem of a fruit too unripe to be so severed thereby, to pivot sufficiently away from its normal rest position (82) towards its over-center position to enable its arm (32) to bypass such unyielding branch or fruit stem;
**characterised in that**:
the slot (94) of each finger (52) is curved and the other end (96) of the spring (98) of the finger engages one end (107) of the curved slot;
when any finger (52) pivots to its depressed position, the spring (98) thereof applies a restoring force towards the normal rest position (82); and
when any finger (52) pivots to its over-center position, the spring (98) thereof extends and said other end (96) of the spring temporarily transfers to the opposite end (106) of the curved slot (94) as the spring applies a restoring force towards the normal rest position (82).

11. The method according to claim 10, including a step of mounting the supporting arms (32) for the picking fingers (52) so resiliently as to enable such an arm, upon being deployed, to depart from its horizontal forward orientation enough to bypass an insufficiently yielding branch so encountered.

12. The method according to claim 10 or 11, including the step of mounting the supporting arms (32) to enable such an arm, upon encountering a sufficiently unyielding branch or trunk in being deployed, to undergo an unseating retrograde movement on its mount, thereby enabling the deployment of other arms to be completed without damage from any such encounter, plus a subsequent step of reseating any unseated arm in its normal forwardly seated position on its mount.

13. The method according to claim 12, wherein the step of reseating unseated arms (32) comprises juxtaposing their back ends (51) against a stationary upright surface (142) perpendicular thereto as the array becomes substantially completely withdrawn.

14. The method according to any one of claims 10 to 13, including the preliminary step of arranging the array (112) in a pattern, wherein there are at least several dozen laterally spaced arms (32) in each level of at least a couple dozen vertically spaced levels of the array, including vertically aligning supporting arms in alternate levels, offsetting the vertical alignment of the arms in intervening levels.

15. The method according to any one of claims 10 to 14, including the step of deploying a collecting pan (192) underneath the deployed array (112), and collecting the detached fruit in it.

16. The method according to any one of claims 10 to 15, including the step of carrying all of the mentioned components on a mobile platform (122) transportable by means of a motor vehicle dedicated to mechanically harvesting tree-ripened fruit.

17. The method according to claim 16, wherein when in deployable position the array (112) is taller than it is wide, and including the step of interchanging the vertical and horizontal extent of the array solely for the purpose of facilitating its over-the-road transportation.

## Patentansprüche

1. Maschine (30) zum Ernten von am Baum gereiften Früchten, mit einer Reihe (112) von einzeln angebrachten, im wesentlichen horizontal ausgerichteten Armen (32), deren jeder sich seitlich erstreckende Früchtepflückfinger (52) haltert, deren jeder auf einer Schwenkwelle (90) in dem Arm angebracht ist und aus einer Seitenöffnung (92) in dem Arm heraussteht und eine normale Ruheposition (82) hat, in welcher der Finger schräg rückwärts heraussteht und aus welcher der Finger zu einer tiefliegenden Position gegen den Arm nach hinten schwenkbar ist und nach vorn zu einer außermittigen Position gegen die äußere Oberfläche des Armes schwenkbar ist, um einen unnachgiebigen Zweig oder Stamm einer zu unreifen, von dem Finger abzuschneidenden Frucht zu umgehen, wenn der Finger nach dem Zurückziehen aus dem Baumblattwerk auf einen solchen Zweig oder Stamm trifft, wobei es einen Schlitz (94) in der Basis des Fingers (52) gibt und eine Feder (92) zum Vorspannen der Basis des Fingers an einem Ende an einer Verankerung (100) in dem Arm angebracht ist und in der normalen Ruheposition des Fingers nicht ausgefahren ist;
**dadurch gekennzeichnet, daß**:
(i) der Schlitz (94) dieses Fingers (52) gekrümmt ist und das andere Ende (96) der Feder (98) des Fingers mit einem Ende (107) des gekrümmten Schlitzes in Eingriff kommt;
(ii) wenn irgendein Finger (52) in seine tiefliegende Position schwenkt, seine Feder (98) angeordnet ist, um eine Rückstellkraft zu der normalen Ruheposition (82) hin aufzubringen;
(iii) wenn irgendein Finger (52) in seine außermittige Position schwenkt, seine Feder (98) angeordnet ist, sich zu strecken, wobei das andere Ende (96) der Feder angeordnet ist, um vorübergehend zu dem gegenüberliegenden Ende (106) des gekrümmten Schlitzes (94) überzugehen, und die Feder angeordnet ist, eine Rückstellkraft zu der normalen Ruheposition (82) hin aufzubringen; und
(iv) die Maschine ferner aufweist:
federnd elastische Armhalteteile (170) in Blockform, zwischen denen jeder Arm (32) auf- oder abbiegbar ist, sowie Seitenwege, welche dadurch die Möglichkeit haben,
einen Zweig, den man nach dem Entfalten der Reihe (112) in das Baumblattwerk hinein angetroffen hat, zu umgehen; und
Führungen (162), zwischen denen jeder Arm (32) nahe seinem hinteren Ende normalerweise gekoppelt ist, um mit Kupplungen (182) auf den Führungen zusammenzupassen, und durch welche der Arm in die Lage versetzt wird, abzukoppeln und sich in Gleitkontakt mit diesen rückwärts zu bewegen wie beim Auftreffen auf einen Baumstamm oder ein anderes unbewegliches Objekt während seiner Entfaltung und an welche der Arm wieder angekoppelt werden kann, nachdem er in seine zuvor unentfaltete Position zurückgezogen worden ist.

2. Erntemaschine nach Anspruch 1, wobei die Führungen (162) für einen einzelnen Arm (32) jede auf einer Fläche eine Armberührungsnut (164) haben, um den Arm gleitbar in dieser aufzunehmen, und auf ihrer gegenüberliegenden Fläche eine Ausnehmung (166) haben, um eine erste Fläche (176) eines des Paares von federnd elastischen Blöcken (170) aufzunehmen.

3. Erntemaschine nach Anspruch 2, wobei eine zweite Fläche jedes Blockes des Paares von federnd elastischen Blöcken (170) in eine Pfanne (172, 174) auf einem benachbarten Anbringkasten (120) paßt, der auf einem Rahmen (116) der Armreihe (112) gehaltert ist.

4. Erntemaschine nach einem vorhergehenden Anspruch, wobei abwechselnde Niveaus der Reihe (112) der Arme (32) und ihre entsprechenden Anbringteile (170) seitlich versetzt sind, wodurch die Arme und ihre Anbringteile diagonal mit jenen in benachbarten Niveaus ausgerichtet sind und vertikal mit jenen in alternativen Niveaus ausgerichtet sind.

5. Erntemaschine nach einem vorhergehenden Anspruch, wobei der Schlitz (94) konkav zum Ende der in diesem in Eingriff stehenden Feder (98) gekrümmt ist, wodurch ein Übergang dieses Federendes (96) aus einer Ruheposition (102) in dem einen Ende (107) des Schlitzes zu der gestreckten Position der Feder am gegenüberliegenden Ende (106) des Schlitzes ermöglicht ist.

6. Erntemaschine nach einem vorhergehenden Anspruch, mit einem Entfaltungsmechanismus in der Form eines Pantrographgestänges (140, 152, 156), welches streckbar ein Halterungsgehäuse (142) und die Reihe (112) von Armen (32) verbindet.

7. Erntemaschine nach einem vorhergehenden Anspruch, mit einer Früchtesammelanordnung (190) mit einer Einfangpfanne (192) unter der Armreihe (112) und einer Übergangsanordnung (196), die sich vom hinteren Ende der Pfanne zu einer Ausgangsendöffnung (212) erstreckt.

8. Erntemaschine nach Anspruch 7, mit einer Liftanordnung (194) für die Einfangpfanne, wobei die Anordnung an einer Verlängerung (194) auf dem Armgehäuse (110) angebracht ist.

9. Erntemaschine nach Anspruch 7 oder 8, wobei die Einfangpfanne (192) angeordnet ist, um auf dem Boden zu ruhen, wenn sie sich in der Position befindet, um während des Zurückziehens der Reihe Früchte zu sammeln.

10. Verfahren zum mechanischen Ernten von an Bäumen gereiften Früchten unter Verwendung einer Maschine (30) mit einer Pflückreihe (112) von federnd elastisch angeordneten, im wesentlichen horizontalen Armen (32), deren jeder seitlich eine Vielzahl von Früchtepflückfingern (52) haltert, wobei jeder Finger auf einer Schwenkwelle (90) in dem Arm angebracht ist und aus einer Seitenöffnung (92) in dem Arm vorsteht und eine normale Ruheposition (82) hat, in welcher der Finger schräg rückwärts vorsteht und aus welcher der Finger nach rückwärts zu einer tiefliegenden Position gegen den Arm und nach vorn zu einer außermittigen Position gegen die Außenfläche des Armes schwenkbar ist, wobei es in der Basis des Fingers (52) einen Schlitz (94) gibt und eine Feder (98) zum Vorspannen der Basis des Fingers mit einem Ende an einer Verankerung (100) in dem Arm angebracht und in der normalen Ruheposition des Fingers unausgestreckt ist, wobei das Verfahren die folgenden Schritte aufweist:
Entfalten der Pflückreihe von Armen (32) nach vorn in das Fruchtbaumblätterwerk, wobei ein beliebiger Finger in seine tiefliegende Position geschwenkt wird, wenn ein Zweig angetroffen wurde, wenn die Reihe (112) in das Blätterwerk eintritt, um ein effektives Falten zu ermöglichen;
nach rückwärts Herausziehen der Reihe (112) aus dem Blätterwerk, wobei mindestens einige der vorstehenden Pflückfinger (52) nahe Früchteäste antreffen und ergreifen, ob sie gereifte oder unreife Früchte tragen;
Schneiden der Äste gereifter Früchte mit den Greifpflückfingern (52), wenn die Äste so festgehalten sind, und somit Freigeben der Früchte, deren Äste geschnitten sind, um sie darunter zu sammeln; und
Schaffen der Möglichkeit für einen beliebigen Finger (52) für den Fall, daß nach Zurückziehen dieser Finger auf einen unnachgiebigen Zweig oder einen Ast einer zu unreifen Frucht, um damit geschnitten zu werden, antrifft, um aus seiner normalen Ruheposition (82) zu seiner außermittigen Position hin ausreichend fort zu schwenken, um für seinen Arm (32) die Möglichkeit zu schaffen, einen solchen unnachgiebigen Zweig oder Fruchtstamm zu umgehen;
**dadurch gekennzeichnet, daß**:
der Schlitz (94) jedes Fingers (52) gekrümmt ist und das andere Ende (96) der Feder (98) des Fingers mit einem Ende (107) des gekrümmten Schlitzes in Eingriff tritt;
wenn irgendein Finger (52) in seine tiefliegende Position schwenkt, seine Feder (98) eine Rückstellkraft zu der normalen Ruheposition (82) hin aufbringt; und
wenn irgendein Finger (52) in seine außermittige Position schwenkt, seine Feder (98) sich verlängert und das andere Ende (96) der Feder vorübergehend zu dem gegenüberliegenden Ende (106) des gekrümmten Schlitzes (94) übergeht, wenn die Feder eine Rückstellkraft zu der normalen Ruheposition (82) hin aufbringt.

11. Verfahren nach Anspruch 10, mit dem Anbringen der Haltearme (32) für die Pflückfinger (52) in so federnd elastischer Weise, daß ein solcher Arm nach seinem Entfalten in die Lage versetzt wird, aus seiner horizontalen Vorwärtsausrichtung abzugehen, die ausreicht, einen unzureichend nachgiebigen Zweig, dem begegnet wurde, zu umgehen.

12. Verfahren nach Anspruch 10 oder 11 mit dem Anbringen der Haltearme (32), um es einem solchen Arm zu ermöglichen, nach dem Begegnen eines ausreichend unnachgiebigen Zweiges oder Stammes beim Entfaltvorgang, sich bei seinem Anbringen einer von seinem Sitz bringenden, rückläufigen Bewegung zu unterziehen, wodurch die Möglichkeit geschaffen wird, daß die Entfaltung der anderen Arme ohne Beschädigung von irgendeinem solchen Begegnen vervollständigt wird, plus einem nachfolgenden Schritt, bei welchem irgendein aus seinem Sitz gebrachter Arm bei seinem Anbringen wieder in seiner normalen, nach vorn in den Sitz gebrachten Position in seinen Sitz zurückgebracht wird.

13. Verfahren nach Anspruch 12, bei welchem das Zurückbringen aus ihrem Sitz gebrachter Arme (32) enthält, daß ihre hinteren Enden (51) gegen eine stationäre, aufrechte Fläche (142) senkrecht zu diesen nebeneinandergebracht werden, wenn die Reihe im wesentlichen vollständig zurückgezogen wird.

14. Verfahren nach einem der Anspruche 10 bis 13 mit dem vorläufigen Schritt des Anordnens der Reihe (112) in einem Muster, wobei es mindestens sieben Dutzend seitlich im Abstand angeordneter Arme (32) auf jedem Niveau von mindestens einigen Dutzend vertikal im Abstand angeordneter Niveaus der Reihe gibt, einschließlich sich vertikal ausrichtender Haltearme in abwechselnden Niveaus, wobei die vertikale Ausrichtung der Arme in dazwischenliegenden Niveaus versetzt wird.

15. Verfahren nach einem der Ansprüche 10 bis 14 mit dem Entfalten einer Sammelpfanne (192) unter der entfalteten Reihe (112) und Sammeln der abgenommenen Früchte in dieser.

16. Verfahren nach einem der Ansprüche 10 bis 15 mit dem Tragen aller erwähnter Bestandteile auf einer mobilen Plattform (122) die mittels eines Motorfahrzeuges transportierbar ist, welches dafür vorgesehen ist, mechanisch am Baum gereifte Früchte zu ernten.

17. Verfahren nach Anspruch 16, wobei die Reihe (112), wenn sie sich in entfaltbarer Position befindet, höher als breit ist, wobei die vertikale und horizontale Erstreckung der Reihe nur für den Zweck ausgetauscht wird, daß ihr Transport über die Straße ermöglicht wird.

## Revendications

1. Machine (30) destinée à récolter des fruits mûris sur arbre, et ayant un réseau (112) de bras alignés sensiblement horizontalement, montés de manière individuelle (32), chaque bras supportant des doigts de cueillette de fruit s'étendant latéralement (52), chaque doigt étant monté sur un arbre de pivotement (90) situé dans le bras, et faisant saillie à l'extérieur d'une ouverture latérale (92) située dans le bras, et ayant une position d'appui normale (82) dans laquelle le doigt fait saillie obliquement vers l'arrière, et à partir de laquelle le doigt peut pivoter vers l'arrière vers une position enfoncée contre le bras, et peut pivoter vers l'avant vers une position au-dessus du centre contre la surface extérieure du bras pour éviter à une branche rigide ou à une tige d'un fruit trop vert d'être coupée par l'intermédiaire du doigt lorsque, lors d'un retrait à partir d'un feuillage d'arbre, le doigt rencontre une telle branche ou tige, une fente (94) étant située sur la base du doigt (52), et un ressort (92) destiné à rappeler la base du doigt ayant une première extrémité fixée sur un ancrage (100) situé dans le bras, et n'étant pas étendu dans la position d'appui normale du doigt,
**caractérisée en ce que** :
(i) la fente (94) de chaque doigt (52) est incurvée, et l'autre extrémité (96) du ressort (98) du doigt vient en prise avec une première extrémité (107) de la fente incurvée,
(ii) lorsqu'un doigt quelconque (52) pivote vers sa position enfoncée, son ressort (98) est agencé pour appliquer une force de rappel en direction de la position d'appui normale (82),
(iii) lorsqu'un doigt quelconque (52) pivote vers sa position au-dessus du centre, son ressort (98) est agencé pour s'étendre, ladite autre extrémité (96) du ressort est agencée pour un transfert temporaire vers l'extrémité opposée (106) de la fente incurvée (94), et le ressort est agencé pour appliquer une force de rappel en direction de la position d'appui normale (82) ; et
(iv) la machine comporte de plus :
des éléments de montage d'arbre souples (70) en forme de bloc, entre lesquels chaque bras (32) peut être fléchi vers le haut ou vers le bas, ainsi que sur les côtés, en étant ainsi capable de contourner une branche rencontrée lors du déploiement du réseau (112) dans un feuillage d'arbre ; et
des guides (162), entre lesquels chaque bras (32) est relié normalement, à proximité de son extrémité arrière, à des couplages d'appariement (182) situés sur les guides, et à partir desquels l'arbre est capable de se découpler et de se déplacer vers l'arrière dans un contact coulissant avec ceux-ci, comme lorsqu'il rencontre un tronc d'arbre ou un autre objet immobile pendant son déploiement, et auxquels le bras peut être couplé à nouveau, lorsqu'il est rétracté dans sa position non déployée précédente.

2. Machine de récolte selon la revendication 1, dans laquelle les guides (162) destinés à un bras unique (32) ont chacun, sur une première face, une gorge de contact de bras (164) pour recevoir le bras de manière coulissante dans celle-ci et, sur leurs faces opposées, un évidement (166) pour recevoir une première face (176) d'un premier bloc de la paire de blocs souples (170).

3. Machine de récolte selon la revendication 2, dans laquelle une seconde face de chaque bloc de la paire de blocs souples (170) s'agence dans un plateau (172, 174) situé sur une boîte de montage adjacente (120) supportée sur un châssis (116) du réseau de bras (112).

4. Machine de récolte selon l'une quelconque des revendications précédentes, dans laquelle des niveaux alternés du réseau (112) des bras (32) et leurs éléments de montage respectifs (170) sont décalés latéralement, de sorte que les bras et leurs éléments de montage sont alignés en diagonale avec ceux de niveaux adjacents et sont alignés verticalement avec ceux de niveaux alternés.

5. Machine de récolte selon l'une quelconque des revendications précédentes, dans laquelle la fente (94) est incurvée de manière concave en direction de l'extrémité du ressort (98) en prise dans celle-ci, en facilitant ainsi un transfert de cette extrémité de ressort (96) à partir d'une position d'appui (102) dans ladite première extrémité (107) de la fente vers la position étendue du ressort au niveau de ladite extrémité opposée (106) de la fente.

6. Machine de récolte selon l'une quelconque des revendications précédentes, comportant un mécanisme de déploiement ayant la forme d'une liaison en pantographe (140, 152, 156) reliant de manière extensible un boîtier de support (142) et le réseau (112) des bras (32).

7. Machine de récolte selon l'une quelconque des revendications précédentes, comportant un assemblage de recueil de fruits (190) ayant un plateau de réception (192) situé en dessous du réseau de bras (112), et un ensemble de transfert (196) s'étendant à partir de l'extrémité arrière du plateau vers une ouverture d'extrémité de sortie (212).

8. Machine de récolte selon la revendication 7, comportant un ensemble de levage de plateau de réception (194) fixé sur un prolongement (194) situé sur le boîtier de bras (110).

9. Machine de récolte selon la revendication 7 ou 8, dans laquelle le plateau de réception (192) est agencé pour être en appui sur le sol lorsqu'il est dans une position de recueil de fruits pendant le retrait du réseau.

10. Procédé pour récolter de manière mécanique des fruits mûris sur arbre en utilisant une machine (30) ayant un réseau de cueillette (112) constitué de bras sensiblement horizontaux montés de manière élastique (32), chaque bras supportant de manière latérale une pluralité de doigts de cueillette de fruit (52), chaque doigt étant monté sur un arbre de pivotement (90) dans le bras, et faisant saillie à l'extérieur d'une ouverture latérale (92) située dans le bras, et ayant une position d'appui normale (82) dans laquelle le doigt fait saillie obliquement vers l'arrière, et à partir de laquelle le doigt peut être pivoté vers l'arrière vers une position enfoncée contre le bras, et vers l'avant vers une position au-dessus du centre contre la surface extérieure du bras, une fente (94) étant située dans la base du doigt (52), et un ressort (98) destiné à rappeler la base du doigt ayant une première extrémité fixée sur un ancrage (100) situé dans le bras, et n'étant pas étendu dans la position d'appui normale du doigt, le procédé comportant les étapes suivantes consistant à :
déployer le réseau de cueillette constitué de bras (32) vers l'avant dans un feuillage d'arbre fruitier, un doigt quelconque étant pivoté vers sa position enfoncée lors de la rencontre avec une branche lorsque le réseau (112) entre dans le feuillage, de manière à permettre un déploiement efficace,
retirer le réseau (112) à l'extérieur depuis le feuillage, de sorte qu'au moins certains des doigts de cueillette faisant saillie (52) rencontrent et saisissent des tiges de fruits situées à proximité, portant un fruit mûr ou vert,
couper, à l'aide des doigts de cueillette de préhension (52), les tiges de fruits mûrs ainsi saisies, et libérer ainsi les fruits dont les tiges ont été coupées, pour collecte en dessous ; et
permettre à un doigt quelconque (52), dans le cas où, lors du retrait, ce doigt rencontre une branche rigide ou une tige d'un fruit trop vert devant être coupé ainsi, de pivoter suffisamment loin à partir de sa position d'appui normale (82) en direction de sa position au-dessus du centre pour permettre à son bras (32) de contourner une telle branche rigide ou une tige de fruit ;
**caractérisé en ce que** :
la fente (94) de chaque doigt (52) est incurvée, et l'autre extrémité (96) du ressort (98) du doigt vient en prise avec une première extrémité (107) de la fente incurvée,
lorsqu'un doigt quelconque (52) pivote vers sa position enfoncée, son ressort (98) applique une force de rappel en direction de la position d'appui normale (82); et
lorsqu'un doigt quelconque (52) pivote vers sa position au-dessus du centre, son ressort (98) s'étend, et ladite autre extrémité (96) du ressort se transfère de manière temporaire vers l'extrémité opposée (106) de la fente incurvée (94), lorsque le ressort applique une force de rappel en direction de la position d'appui normale (82).

11. Procédé selon la revendication 10, comportant une étape consistant à monter les bras de support (32) pour les doigts de cueillette (52), de manière à permettre qu'un tel bras, lorsqu'il est déployé, parte depuis son orientation horizontale vers l'avant, suffisamment pour contourner une branche insuffisamment souple rencontrée de la sorte.

12. Procédé selon la revendication 10 ou 11, comportant l'étape consistant à monter des bras de support (32) pour permettre à un tel bras, lorsqu'il rencontre une branche suffisamment rigide ou un tronc déployé, de subir un mouvement rétrograde l'enlevant de son siège sur sa monture, en permettant ainsi au déploiement des autres bras de se terminer sans détérioration à partir d'une telle rencontre quelconque, et une étape consécutive supplémentaire de repositionnement d'un bras quelconque sorti de son siège dans sa position en place vers l'avant normale sur sa monture.

13. Procédé selon la revendication 12, dans lequel l'étape consistant à repositionner des bras sortis de leur siège (32) comporte l'étape consistant à juxtaposer leurs extrémités arrière (51) contre une surface droite stationnaire (142) perpendiculaire à celles-ci, de manière à ce que le réseau devienne sensiblement complètement retiré.

14. Procédé selon l'une quelconque des revendications 10 à 13, comportant l'étape préliminaire consistant à agencer le réseau (112) selon un motif, dans lequel il existe au moins plusieurs douzaines de bras espacés latéralement (32) dans chaque niveau d'au moins deux douzaines de niveaux espacés verticalement du réseau, incluant l'étape consistant à aligner verticalement des bras de support dans des niveaux alternés, et à décaler l'alignement vertical des bras dans des niveaux intervenants.

15. Procédé selon l'une quelconque des revendications 10 à 14, comportant l'étape consistant à déployer un plateau de réception (192) en dessous du réseau déployé (112), et à recueillir le fruit détaché dans celui-ci.

16. Procédé selon l'une quelconque des revendications 10 à 15, comportant l'étape consistant à transporter tous les composants mentionnés sur une plate-forme mobile (122) pouvant être transportée par l'intermédiaire d'un véhicule à moteur dédié à la récolte de manière mécanique de fruits mûris sur arbre.

17. Procédé selon la revendication 16, dans lequel, dans une position pouvant être déployé, le réseau (112) est plus grand qu'il n'est large, et incluant l'étape consistant à changer mutuellement l'étendue verticale et l'étendue horizontale du réseau, seulement dans le but de faciliter son transport sur la route.
